# EUROPEAN PATENT APPLICATION

(11) **EP 2 264 634 A1**
(43) Date of publication of application: **22.12.2010**
(21) Application number: 08873839.8
(22) Date of filing: 10.11.2008
(51) Int. Cl.: G06F 21/00

(54) **METHOD, SYSTEM AND APPARATUS FOR CONTENT IDENTIFICATION**

(30) Priority: 07.04.2008 CN 200810089543
(71) Applicant: Huawei Technologies Co., Ltd., Shenzhen, Guangdong Province 518129 (CN)
(72) Inventor: GAO, Hongtao, Shenzhen Guangdong Province 518129 (CN); LIU, Yijun, Shenzhen Guangdong Province 518129 (CN)
(74) Representative: Pfenning, Meinig & Partner GbR
(86) International application number: PCT/CN2008/073001
(87) International publication number: WO 2009/124440

(57) **Abstract**

A method, a system and an apparatus for content identification are disclosed according to the embodiments of the present invention. The method for content identification includes the following steps: electing an algorithm for extracting fingerprint according to a content type and a purpose of managing the content by a service entity, and extracting a content fingerprint; and acquiring a content attribute of a registered content according to the content fingerprint. With the embodiments of the present invention, the CIM entity selects a most appropriate identification method for accurately identifying the content according to different content types, and registers the content submitted by the registration entity. After the service entity acquires the content attribute of the registered content, the service entity manages the content of the service entity according to the content attribute. Moreover, the service entity does not need to connect to the CIM entity every time for the content verification, thereby reducing the burden of the CIM entity.

## Description

The application claims the priority of CN application No. 200810089543.X, filed on April 7, 2008 with the State Intellectual Property Office of the People's Republic of China, entitled "METHOD, SYSTEM AND APPARATUS FOR CONTENT IDENTIFICATION", the entire contents of all of which are incorporated herein by reference.

### FIELD OF THE INVENTION

The present invention relates to communications field, and more specifically, to a method, a system and an apparatus for content identification.

### BACKGROUND

With the growth of the Internet, there have already been abundant applications relating to multimedia content, such as music, software, or movie download, video share, short message and multimedia message. In accompany with these applications, the issues concerning copyright, spam, illegal information, as well as virus and malicious plug-in become more and more critical. All of the issues require a correct content identification. It is particularly important to determine, by correctly identifying a content, whether the content is protected by a copyright, whether the content is junk information, etc.

Downloading and sharing electronic contents of music, movie, software, electronic library are already very popular Internet applications. With the development of the applications, there are mass contents whose copyrights are infringed at each website for downloading and sharing. These contents attract numerous users for the websites. The contents are generally published by Content Providers (CPs). Uploading and transmitting the contents freely without authorization and payment may dramatically impair lawful interests of the CPs.

To address the copyright issue of such type, recently, Content Identification (CI) technique gradually becomes an approach adopted by the CP for protecting copyrights of some important contents. CI technique refers to extracting a fingerprint of a content that is different from another content using a technique for extracting a content fingerprint. A fingerprint of a content with copyright is first calculated. Then, a fingerprint of a content transmitted over the website is calculated and compared with the fingerprint of the content with copyright, so as to determine whether the transmitted content is the same as the content with copyright, or whether the transmitted content is part of the content with copyright. If the transmitted content is the same as the content with copyright, or part of the content with copyright, the transmission and usage of the transmitted content is managed according to copyright management rules of the content with copyright.

In prior art, there is another method for shielding the upload of content under protection by means of a copyright management database of contents that is established by a centralized third party. Content Identifier Forum (CIDF) specifies application architecture for copyright protection. In the application architecture, basically, the content to be distributed is identified by means of an identifier. And, the identifier, a related content attribute, together with a distribution attribute concerning related rules specified for the distribution are bound, where the related content attribute may be, for example, an attribute of the content itself (e.g., size and type), creator attribution, and copyright attribution.

However, it is discovered that the technique encounters at least the following defects. According to the solution, the fingerprints of all types of contents are calculated using traditional hash algorithm Message Digest Algorithm5 (MD5). Thus, the verification and identification of the content may not be successfully accomplished if the content is changed in a single bit. The content to be detected can easily elude the verification and identification according to this solution for content detection.

### SUMMARY

According to embodiments of the present invention, a method, a system and an apparatus for content identification are provided in order to select an appropriate identification method for accurately identifying a content according to different types of contents.

To this end, according to one aspect, a method for content identification is provided by an embodiment of the present invention. The method includes the following steps: selecting an algorithm for extracting fingerprint according to a content type and a purpose of managing the content by a service entity, and extracting a content fingerprint; and acquiring a content attribute of a registered content according to the content fingerprint.

According to another aspect, another method for content identification is provided by an embodiment of the present invention. The method includes: receiving a request for querying a content attribute sent by a service entity, wherein the request for querying the content attribute comprises a content fingerprint and a type of query request; searching for a stored content fingerprint closest to the content fingerprint in a content fingerprint database of a Content Identification Manager (CIM) entity according to the content fingerprint carried in the request for querying the content attribute; and acquiring the content attribute of the registered content according to the type of query request carried in the request for querying the content attribute, after the stored content fingerprint closest to the content fingerprint is found, and returning the acquired content attribute to the service entity.

According to yet another aspect, a content registration method for content identification is provided by an embodiment of the present invention. The method includes: receiving a request for registering content sent by a registration entity; selecting an algorithm according to parameters of a content type and a registration purpose carried in the request for registering content, and generating a content fingerprint; and storing the generated content fingerprint and the content attribute of the content to accomplish the registration of the content submitted by the registration entity.

According to yet another aspect, a system for content identification is provided by an embodiment of the present invention. The system includes: a service entity, configured to select an algorithm for extracting fingerprint according to a content type and a purpose of managing the content by the service entity, extract a content fingerprint, and acquire a content attribute of the content registered with the CIM entity according to the content fingerprint; and
a Content Identification Manager (CIM) entity, configured to receive a request for querying a content attribute sent by the service entity, wherein the request for querying the content attribute comprises the content fingerprint and a type of query request; search for a stored content fingerprint closest to the content fingerprint in a content fingerprint database of the CIM entity according to the content fingerprint carried in the request for querying the content attribute; acquire the content attribute of the registered content according to the type of query request carried in the request for querying the content attribute, after the stored content fingerprint closest to the content fingerprint is found; and return the acquired content attribute to the service entity.

According to yet another aspect, a service entity is provided by an embodiment of the present invention. The service entity includes: a fingerprint extraction module, configured to select an algorithm for extracting fingerprint according to a content type and a purpose of managing the content by the service entity, and extract a content fingerprint; and an attribute acquisition module, configured to acquire the content attribute of the content registered with the CIM entity according to the content fingerprint extracted by the fingerprint extraction module.

According to yet another aspect, a Content Identification Manager (CIM) entity is provided by an embodiment of the present invention. The CIM entity includes: a content registration module, configured to receive a request for registering content sent from a registration entity 13, and register a content submitted by the registration entity; a content fingerprint database, configured to store a content fingerprint and a content attribute of the registered content; and a verification and query processing module, configured to receive a request for querying a content attribute sent by a service entity, wherein the request for querying the content attribute comprises a content fingerprint and a type of query request; search for a stored content fingerprint closest to the content fingerprint in a content fingerprint database of the CIM entity according to the content fingerprint carried in the request for querying the content attribute; acquire a content attribute of the registered content according to the type of query request carried in the request for querying the content attribute, after the stored content fingerprint closest to the content fingerprint is found; and return the acquired content attribute to the service entity.

Compared with the conventional art, the embodiments of the present invention enjoy the following advantages: According to the embodiments of the present invention, the service entity selects an algorithm for extracting fingerprint according to a content type and a purpose of managing the content by the service entity and extracts a content fingerprint, acquires a content attribute of a registered content according to the content fingerprint, and manages the content of the service entity according to the acquired content attribute. With the embodiments of the present invention, a universal CIM entity selects an appropriate identification method for accurately identifying the content according to different content types, and registers the content submitted by the registration entity. After the service entity acquires the content attribute of the registered content, the service entity manages the content of the service entity according to the content attribute.

### BRIEF DESCRIPTION OF THE DRAWINGS

Figure 1 illustrates a block diagram of a system for content identification according to one embodiment of the present invention;
Figure 2 illustrates a flowchart of a method for content identification according to one embodiment of the present invention;
Figure 3 illustrates a flowchart of a method for content identification according to another embodiment of the present invention;
Figure 4 illustrates a flowchart of content fingerprint extraction and certificate generation according to one embodiment of the present invention;
Figure 5 illustrates a schematic diagram of a format of a content certificate according to one embodiment of the present invention;
Figure 6 illustrates a schematic diagram of a verification process according to one embodiment of the present invention;
Figure 7 illustrates a flowchart for acquiring content attribute according to one embodiment of the present invention;
Figure 8 illustrates a block diagram of a Content Identification Manager (CIM) entity 11 according to one embodiment of the present invention; and
Figure 9 illustrates a block diagram of a service entity 12 according to one embodiment of the present invention.

### DETAILED DESCRIPTION

According to an embodiment of the present invention, a method for content identification is provided, which may accurately identify various types of content. In the embodiment of the present invention, a universal content identification system is established. The content identification system may be utilized by a service entity for the copyright management, content filtering, software verification of contents that relate to the service entity. Moreover, the content identification system may further be flexibly extended to other applications. The service entity refers to an entity that provides specific service such as a website, a user terminal, or a service gateway. According to the embodiment of the present invention, a most appropriate identification method for accurately identifying a content is selected with respect to the characteristics of different types of contents, thereby improving the robustness, decreasing the error rate and also reducing the burden and cost of the service entity.

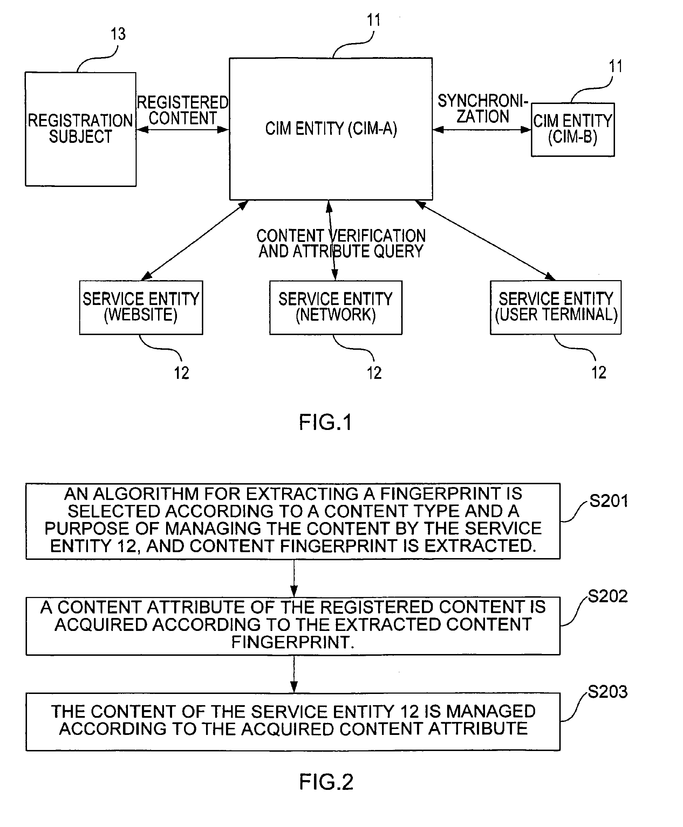

Figure 1 illustrates a schematic diagram of system for content identification according to an embodiment of the present invention. The system includes a Content Identification Manager (CIM) entity 11, a service entity 12 and a registration entity 13. In an embodiment of the present invention, the CIM entity 11 may be maintained via a trusted third party, e.g., telecommunication operator and government, where the trusted third party is an institution trusted by all of the service entity 12, the user and the registration entity 13. The CIM entity 11 is configured to register a content of the registration entity, and to take charge of generating and maintaining a content fingerprint database, to receive a request for querying the content attribute of the service entity 12, where the request for querying the content attribute includes the request for content verification and the content attribute query. The CIM entity 11 is further configured to provide the service entity 12 with services such as content fingerprint query and verification, content verification and content attribute query. According to the content fingerprint carried in the request for querying the content attribute, the CIM entity 11 searches for a stored content fingerprint closest to the content fingerprint in the content fingerprint database. After the stored content fingerprint closest to the content fingerprint is found, the CIM entity 11 acquires the content attribute of the registered content according to a type of the query request carried in the request for querying the content attribute, and returns the acquired content attribute to the service entity 12, so that the service entity 12 may manage the content of the service entity 12. The request for querying the content attribute includes the content fingerprint, an algorithm for generating fingerprint and the type of the query request.

The service entity 12 is configured to select an algorithm for extracting the fingerprint according to type of content and purpose of managing the content by the service entity 12, and extract content fingerprint. The service entity 12 acquires, according to the content fingerprint, the content attribute of the content that is registered with the CIM entity 11, and manages the content of the service entity 12 according to the acquired content attribute.

The registration entity 13 is configured to send a request for registering content to the CIM entity 11, requesting the CIM entity 11 to register the content submitted by the registration entity 13, and to provide a corresponding content attribute. Next, the CIM entity 11 generates content fingerprint and stores it into the content fingerprint database. Regardless of the purpose of content management, that is, for the copyright protection, the filtering for the content, or for the anti-virus software verification, the protected content or the content to be filtered need to be registered with the CIM entity 11.

According to different application purposes, the registration entity 13 may be different, and the registration means may also be different. For example, in terms of the copyright protection and the software verification, the registration entity 13 is usually a content provider or an individual content maker. The content to be registered may be submitted by means of any possible transmission approaches, such as Transfer Protocol (FTP), uploading via a portal website of the CIM entity 11, or by Simple Object Access Protocol (SOAP). In terms of content filtering, the registration entity 13 may be ordinary mobile phone users or customer care staff of the operator. The content to be registered may be submitted by means of Short Messaging Service (SMS), multimedia message, or, uploaded via a portal website of the CIM entity 11, or SOAP, etc.

For the registration, the information that shall be submitted by the registration entity 13 includes the content itself, and parameters indicative of the registration purpose. The registration purpose includes, but not limited to copyright protection, filtering, or software verification. According to the parameter indicative of the registration purpose, the embodiment of the present invention may select different algorithms for extracting fingerprint and different method for processing software verification.

The optional information that may be submitted by the registration entity 13 includes:
(1) Content type and content format. The content type includes, but not limited to: video, audio, text, software or combination thereof. The content format refers to the format of a file, such as Moving Picture Experts Group Audio Layer III (mp3) format and Real Media Variable Bitrate (rmvb) format.
(2) Algorithm identifier. This parameter may be utilized by registration entity for indicating the selected algorithm for extracting the fingerprint.
(3) Copyright statement and copyright management rules. In terms of copyright protection, a copyright statement and copyright management rules shall be submitted. The copyright management rules refer to the rules provided by the content copyright owner that are about how to use and transmit the content. For example, the rules may be using and transmitting without any limitation, or uploading simply by clicking a related advertisement. The copyright management rules may also be associated with a specific user or service entity. For example, allowing the upload at a certain website, or allowing a user for downloading a certain content for N times.
(4) Explanation for the filtering. In terms of content filtering, an explanation for the filtering may be submitted.
(5) Other content attribute, e.g., information of a content author.

According to another implementation of the present invention, there may have a plurality of CIM entities 11 over the network. Different CIM entities 11 may be responsible for managing the content identification within a domain. The registration 13 does not need to register a certain content with all CIM entities 11 one by one. Instead, the registration 13 only needs to register a certain content with only one CIM entity 11. For example, after a content is registered with CIM-A, CIM-A synchronizes the registered content with other CIM entities, e.g., CIM-B. It is convenient for a service entity in the domain to which CIM-B belongs to manage the content of the service entity according to the registered content, thereby reducing the burden and cost of the registration entity 13 and the service entity 12.

In addition, the service entity 12 that performs the content verification and the content query using the CIM entity 11 may be a website, a gateway, or a user terminal, etc.

Figure 2 is a flowchart of a method for content identification according to an embodiment of the present invention. The following steps are included:
Step S201: An algorithm for extracting a fingerprint is selected according to a content type and a purpose of managing the content by the service entity 12, and content fingerprint is extracted. The algorithm adopted by the service entity 12 for extracting the content fingerprint shall be selected according to the type of the content and the purpose of managing the content by the service entity. The specific algorithm herein is identical with the algorithm for extracting the fingerprint used by the CIM entity 11 during the registration process.
Step S202: A content attribute of the registered content is acquired according to the extracted content fingerprint.

Specifically, the content attribute of the registered content may be acquired as follows:

The service entity 12 searches for a content certificate on the service entity 12, and acquires the content attribute according to the content certificate. Specifically, after the content certificate is found, a signature of the content certificate searched is verified. Then, the content attribute is acquired from the content certificate after the signature is successfully verified.

Specifically, the content attribute of the registered content may also be acquired as follows:

The service entity 12 sends the CIM entity 11 a request for querying the content attribute, and receives the content attribute retuned by the CIM entity 11. The request for querying the content attribute includes a content fingerprint, an algorithm for generating the fingerprint, and a type of the query request.

The type of the query request includes: copyright verification for an upload content, copyright verification for a download content, filtering management, and/or software verification.

When the type of the query request refers to the copyright verification for an upload content, the request for querying the content attribute shall further include a service entity identifier. Or,
when the type of the query request refers to the software verification, the request for querying the content attribute may further include a software name and version information. Or,
when the type of the query request refers to the copyright verification for a download content, the request for querying the content attribute shall further include a user identifier.

Step S203: The content of the service entity 12 is managed according to the acquired content attribute.

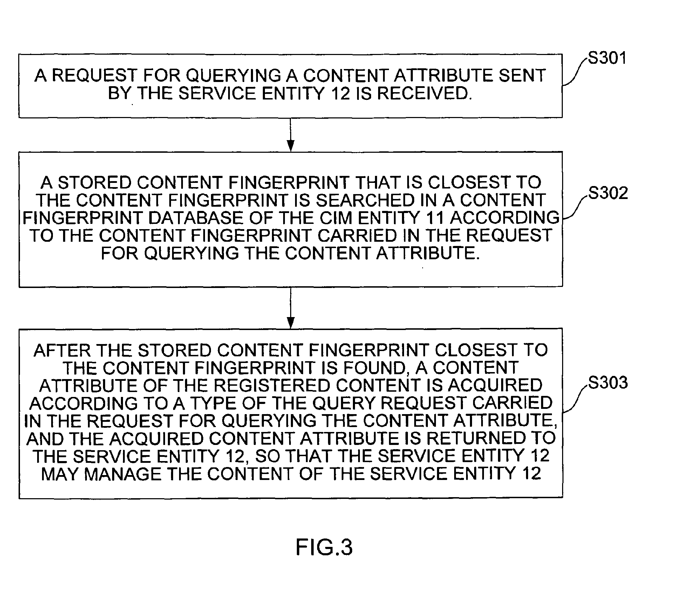

Figure 3 is a flowchart of a method for content identification according to another embodiment of the present invention. The following steps are included:
Step S301: A request for querying a content attribute sent by the service entity 12 is received, where the request for querying the content attribute includes a content fingerprint and a type of the query request. The type of the query request includes: copyright verification for an upload content, copyright verification for a download content, filtering management, and software verification.
Step S302: A stored content fingerprint that is closest to the content fingerprint is searched in a content fingerprint database of the CIM entity 11 according to the content fingerprint carried in the request for querying the content attribute.
Step S303: After the stored content fingerprint closest to the content fingerprint is found, a content attribute of the registered content is acquired according to a type of the query request carried in the request for querying the content attribute, and the acquired content attribute is returned to the service entity 12, so that the service entity 12 may manage the content of the service entity 12.

Specifically, the process that CIM entity 11 acquires the content attribute according to the type of the query request carried in the request for querying the content attribute is as follows:

When the type of the query request refers to the copyright verification for an upload content, the request for querying the content attribute shall further include a service entity identifier. In this case, the CIM entity 11 acquires copyright management rules of the service entity 12 that correspond to the service entity identifier. Thus, the content attribute returned by the CIM entity 11 further includes a copyright statement and the copyright management rules of the service entity 12 that correspond to the service entity identifier.

When the type of the query request refers to the software verification, the request for querying the content attribute may further include a software name and version information. In this case, the CIM entity 11 searches for a stored content fingerprint closest to the content fingerprint in the content fingerprint database of the CIM entity 11, according to the name of the software and the version information carried in the request for querying the content attribute. After the stored content fingerprint closest to the content fingerprint is found, the CIM entity 11 acquires the content attribute according to a type of the query request carried in the request for querying the content attribute, and returns the acquired content attribute to the service entity 12. Or, when the type of the query request refers to the copyright verification for a download content, the request for querying the content attribute shall further include a user identifier.

During the registration process, the CIM entity 11 receives a request for registering content sent by the registration entity 13, and registers the content submitted by the registration entity 13.

Specifically, the registration of the content submitted by the registration entity 13 performed by the CIM entity 11 may be as follows:

The CIM entity 11 selects an algorithm for generating fingerprint according to parameters of the type of the content and the registration purpose, and generates a content fingerprint, then stores the generated content fingerprint and the content attribute of the content.

For example, if the type of the content is text and the registration purpose is to filter the content, such type of content is generally a short message, an email, or a multimedia message, etc. Thus, Hash value of the content is calculated using a traditional Hash algorithm, e.g., Secure Hash Algorithm (SHA)-1, SHA-265, or Message Digest Algorithm5 (MD5). Alternatively, a keyword of text information may first be extracted, and then Hash value of the keyword is calculated. The calculated Hash value serves as the content fingerprint.

For example, if the type of the content is text and the registration purpose is to protect the copyright of the content, such type of content is generally a novel, an essay, a news report, etc. Thus, Hash value of the content is calculated using a traditional Hash algorithm, e.g., SHA-1, SHA-265, or MD5. The calculated Hash value serves as the content fingerprint. The granularity for calculating the content fingerprint may be adjusted according to the policy. That is, Hash value may be calculated with respect to the content of an entire file or calculated with respect to the content of each paragraph or each sentence, where Hash values of each paragraph or each sentence may form an array that serves as the content fingerprint of the entire file.

For example, if the type of the content is picture, audio, or video, a content based Hash algorithm is adopted for extracting the content fingerprint. The content based Hash algorithm includes an algorithm for extracting the content fingerprint and a robustness Hash algorithm.

The CIM entity 11 may further generate a content certificate for the registered content, where the content certificate includes fingerprint of a registered content, a content attribute, a registration entity, and a method for verifying the authenticity of the content attribute.

When there is a plurality of CIM entities over the network, the CIM entity 11 synchronizes the content of the registration entity 13 with CIM entities other than the CIM entity 11. Next, the other CIM entities generate a content certificate for the content of the registration entity 13 according to the registration information of the content. The content certificate generated by the other CIM entities includes the identifier of the original CIM entity 11, and the method for verifying the authenticity of the content attribute adopted by the original CIM entity 11. Consequently, the registration entity 13 may only register with one CIM entity 11, rather than register with all CIM entity one by one, in order to facilitate the service entity 12 in the domain to which the other CIM entities belong in managing the content of the service entity 12 according to the registered content.

Compared with the conventional art, the aforementioned implementation with a single CIM entity 11 at least has the below benefits. In the conventional art, an audio identification method is adopted for shielding the upload of content under protection. First, a database of fingerprints of the content under protection and copyright management rules is established in the website. After the database is established, the content uploaded by the user may be managed. When the user uploads a content to the website via a device of the user, a copyright management module extracts a fingerprint (FP1) of the content using the same algorithm. Next, the copyright management module searches for a stored fingerprint (FP2) closest to the fingerprint in the database. If FP2 is in the database, and the difference between FP2 and FP1 is less than a threshold, the content corresponding to FP1 is regarded as the same one with the content corresponding to FP2. The content uploaded by the user is processed using the copyright management rules of the content in the database.

However, it is discovered that the conventional art encounters the following defects. Because an audio/video has a tremendous volume of contents, the maintenance and management of the content fingerprint database significantly increases the cost of the website. Moreover, the website, as a service entity, may only apply the database to the aspect relating to the service of the website, no further applications can be provided. Some weaker websites have no capacity for establishing such type of database. And, it is impossible for a CP to negotiate about the management solution with all the websites. Thus, a large number of websites fail to manage the content with copyright. According to the present implementation, however, one single or more CIM entities 11 may be utilized for content identification, so that all the service entities in the network may be able to manage the content. Moreover, the data for content identification in the CIM entity 11 may be utilized by all of the service entities, thereby reducing the burden of the service entity.

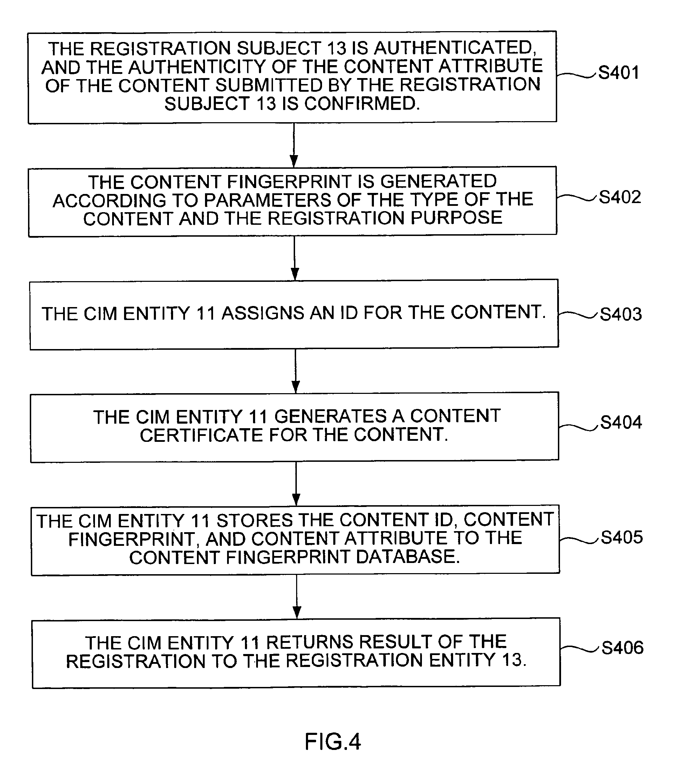

Figure 4 illustrates a flowchart of content fingerprint extraction and certificate generation according to one embodiment of the present invention. After receives a request for registering content, the CIM entity 11 generates a content fingerprint, and stores the content fingerprint together with other data in a content fingerprint database. Specifically, the following steps may be included:
Step S401: The registration entity 13 is authenticated, and the authenticity of the content attribute of the content submitted by the registration entity 13 is confirmed.

After the authentication of the registration entity 13 is passed, the CIM entity 11 registers the content. Meanwhile, the CIM entity 11 needs to verify the authenticity of the content attribute submitted by the registration entity 13. With respect to copyright protection, content ownership attribute and content copyright statement of the registration entity 13 in the content attribute are the most key parts to be verified. The registration entity 13 needs to show an ownership attestation with legal validity, so that the CIM entity 11 may accept the content ownership attribute of the registration entity 13. If the registration entity 13 fails to provide an ownership attestation, the CIM entity 11 may deny the registration with the purpose of copyright protection. With respect to other attributes, e.g., the type of the content, the authenticity of the author, such attributes may be regarded as authentic after the registration entity 13 is successfully authenticated by the CIM entity 11. Alternatively, the authenticity of such attributes may be confirmed by certain manual verification.

Step S402: The content fingerprint is generated according to parameters of the type of the content and the registration purpose.

Before generating the content fingerprint according to parameters of the type of the content and the registration purpose, the CIM entity 11 selects an algorithm for generating fingerprint according to parameters of the type of the content and the registration purpose.

For example, if the type of the content is text and the registration purpose is for filtering, such type of content is generally a short message, an email, or a multimedia message, etc. Thus, Hash value of the content is calculated using a traditional Hash algorithm, e.g., Message Digest Algorithm5 (MD5). Alternatively, a keyword of text information may first be extracted, and then Hash value of the keyword is calculated. The calculated Hash value serves as the content fingerprint.

For example, if the type of the content is text and the registration purpose is for copyright protection, such type of content is generally a novel, an essay, a news report, etc. Thus, Hash value of the content is calculated using a traditional Hash algorithm, e.g., MD5. The calculated Hash value serves as the content fingerprint. The granularity for calculating the content fingerprint may be adjusted according to the policy. That is, Hash value may be calculated with respect to the content of an entire file, or calculated with respect to the content of each paragraph or each sentence, where Hash values of each paragraph or each sentence may form an array that serves as the content fingerprint of the entire file.

For example, if the type of the content is picture, audio, or video, a content based Hash algorithm is adopted for extracting the content fingerprint. The content based Hash algorithm includes an algorithm for extracting the content fingerprint and a robustness Hash algorithm.

Step S403: The CIM entity 11 assigns an identifier (ID) for the content. The purpose of assigning the ID is to bring convenience to the CIM entity 11 in content arrangement and content search according to the ID, e.g., during the software verification and the advertisement triggering. However, when used for copyright protection or filtering, the CIM entity 11 shall search for the content according to the content fingerprint rather than the ID.

In the embodiment of the present invention, the ID may be assigned in the format of Universal Resource Names (URN).

In another implementation, step S404 may also be included, i.e., the CIM entity 11 generates a content certificate for the content. The generated content certificate may be attached at the header of the content file and transmitted together with the content. Or, the generated content certificate may be distributed separately, e.g., timely be synchronized to the service entity 12. The content certificate is used to perform the content verification process without connecting to the CIM entity 11, thereby reducing the load of the CIM entity 11 and improving the efficiency of verification.

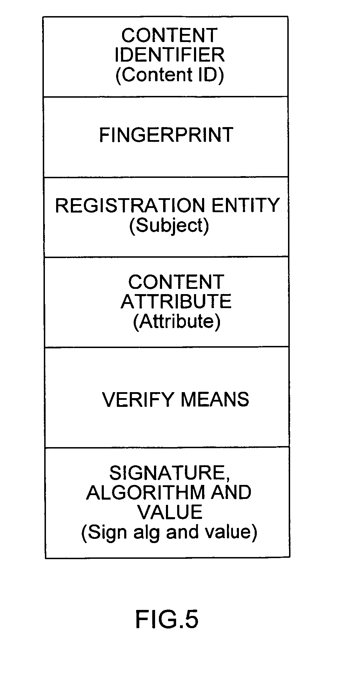

The content certificate may include content ID, content fingerprint, mandatory attribute of content, registration entity 13, method adopted by the CIM entity 11 for determining the authenticity of the content attribute, and signature of above information signed by the CIM entity 11. Figure 5 illustrates an exemplary format of a content certificate. The format of Verify means is: CIMID-Auth-AttrVerify, i.e., the combination of CIMID (CIM identifier), method adopted by the CIM entity for authenticating the registration entity 13 (Auth), and method adopted by the CIM for verifying the authenticity of the content attribute (Attribute Verif), serves as a group of verification methods. The specific group of verification methods needs to be defined according to the specific authentication and verification method. For example, the group of verification methods may be defined as follows:
CIMID-PKI-OwnerEvidwithManual
CIMID-Smartcard-O.wnerEvidwithManual
CIMID-Kerberos-OwnerEvid

The foregoing is merely several examples for defining the specific group of verification methods, while the embodiment of the present invention is not so limited.

In an actual content certificate, CIMID needs to be set to a specific identifier of the CIM entity 11. Public Key Infrastructure (PKI), Smartcard, Kerberos ( authentication protocol) indicate three authentication methods. OwnerEvidwithManual indicates that the method adopted by the CIM entity 11 for verifying the authenticity of the content attribute is requiring the registration entity 13 to provide an ownership attestation with legal validity and manually verifying the authenticity of other content attributes. OwnerEvid indicates that except the copyright statement that is verified by means of the ownership attestation, other attributes are automatically regarded as authentic after the authentication for the registration entity 13 is completed.

Step S405: The CIM entity 11 stores the content ID, content fingerprint, and content attribute to the content fingerprint database.

Step S406: The CIM entity 11 returns result of the registration to the registration entity 13.

According to another implementation, there may have a plurality of CIM entities 11 over the network. The registration process may further include the following. After a content is registered with a CIM entity 11 (referring to as CIM-A hereinafter), CIM-A shall synchronize the registration information with other CIM entities (CIM-B is taken as an example for illustration hereinafter). In this implementation, the registration 13 only needs to register the content with one CIM entity 11 rather than register the content with all CIM entities 11 one by one. Thus, it is convenient for a service entity 12 in the domain to which other CIM entities belong to manage the content of the service entity 12 according to the registered content.

In the synchronization process, the registration information that needs to be transmitted to CIM-B by CIM-A includes: content ID, content fingerprint, content attribute submitted during registration, information of the registration entity, approach for submitting the content to be registered, method adopted by CIM-A for determining the registered content and the authenticity of the content attribute. After the method adopted by CIM-A for determining the authenticity of the content attribute is transmitted to CIM-B, CIM-B may determine the authenticity of the content attribute according to the rules of CIM-B itself and the method adopted by CIM-A for determining the authenticity of the content attribute.

CIM-A may transmit the registration information to CIM-B by various approaches as follows: FTP, SOAP, Secure HyperText Transfer Protocol (SHTTP), etc. But, a security mechanism shall be utilized to ensure integrity of the information during transmission. For example, a Transport Layer Security Protocol (TLS) security connection may be established between CIM-A and CIM-B. CIM-A sends CIM-B the related information of each registered content. The registration information of a plurality of contents may be sent via one TLS connection. Or, the registration information of the content may be sent in form of a certificate, because the CIM signature included in the certificate may ensure the information integrity of the certificate, and accordingly, no other security measures are required.

After the registration information of each content transmitted by CIM-A is received, CIM-B stores the registration information in the database.

CIM-B generates a content certificate for the registration information of each content.

In the field of Verify Means in the generated content certificate, CIMID is set to CIM-A rather than CIM-B. In this way, during the certificate verification, the service entity 12 knows that the content is registered with CIM-A, so that the service entity 12 may determine whether to trust CIM-A according to the policy of the service entity 12 itself.

The certificate generated by CIM-B includes the signature of the content registration information, where the signature is added into the certificate. If CIM-A sends the content registration information to CIM-B in the form of a content certificate, CIM-B may remove the signature of CIM-A from the certificate, and then add a signature of CIM-B. The purpose of the signature of CIM-B in the content certificate is to help the service entity 12 to conveniently verify the content certificate. Because one CIM entity 11 is usually responsible for one domain, the service entity 12 within the domain generally owns the certificate of the CIM entity 11, but may not have the certificate of CIM entities in other domains. Thus, the service entity 12 is not capable of verifying the signature signed by the CIM entities in other domains for the registration information of the content certificate. Accordingly, after each CIM entity 11 receives the content registration information synchronized by other CIM entities, the CIM entity 11 needs to sign a signature on the content registration information using its own certificate.

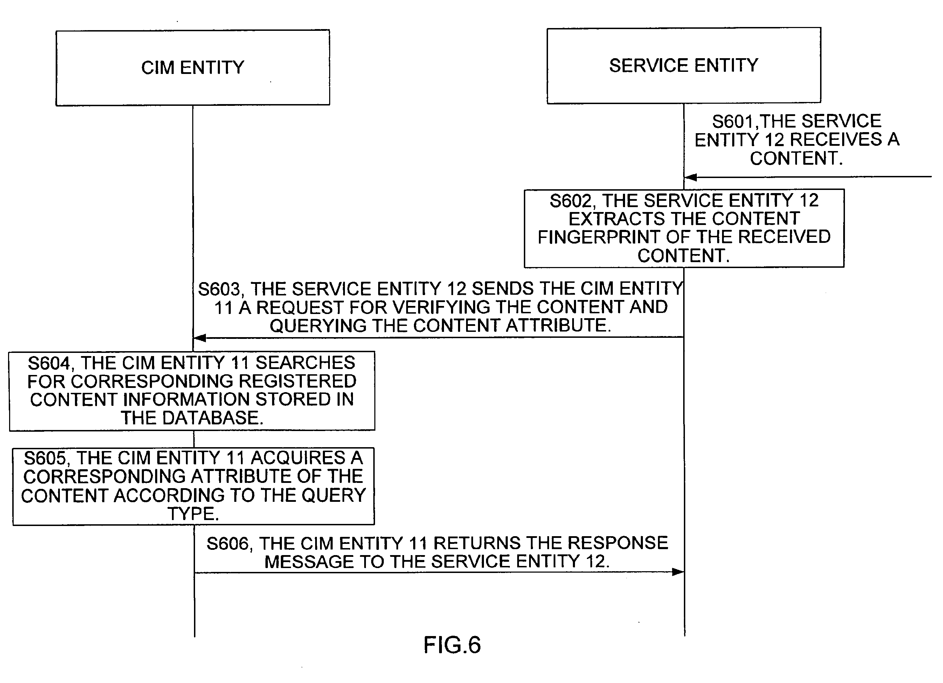

Figure 6 illustrates a schematic diagram of a verification process according to one embodiment of the present invention. After the content is received, the service entity 12 needs to manage the content due to various application requirements. The service entity 12 may be a website, a user terminal or a filtering gateway, etc. The management of content operation performed by the service entity 12 includes but not limited to: copyright protection, transmission management, spam or illegal information filtering, or anti-virus software verification.

Specifically, the process includes the following steps:
Step S601: The service entity 12 receives a content.
Step S602: The service entity 12 extracts the content fingerprint of the received content. The algorithm for extracting the fingerprint shall be selected according to the type of the content and the purpose of managing the content by the service entity 12. The algorithm selected shall be identical with the algorithm for generating the fingerprint used by the CIM entity 11 during the registration process for registering the content submitted by the registration entity 13.

The standard of selecting the algorithm for extracting the content fingerprint by the service entity 12 shall be identical with the standard of selecting the algorithm for extracting the content fingerprint by the CIM entity 11. For example, the two algorithms may be kept consistent by conforming to a unified standard or a predetermined method.

Step S603: The service entity 12 sends the CIM entity 11 a request for verifying the content and querying the content attribute. The request for querying the content attribute carries mandatory parameters including content fingerprint, algorithm for generating fingerprint, and type of the query request. The request for querying the content attribute carries optional parameters including other parameters required for different types of query requests.

The type of query request indicates the purpose of requesting the content verification and querying the content attribute. The CIM entity 11 may perform a corresponding operation according to the parameter of the type of the query request. The type of query request includes but not limited to:
Upload copyright validate, indicating the management of an upload content when a user uploads the content to the website;
Download copyright validate, indicating the management of content copyright and download authorization when a user downloads the content from the website;
Anti-spam filtering, indicating the management of filtering spam information and illegal information;
Software verification, indicating the software verification with the purpose of anti-virus.

When the type of query request is Upload copyright validate, the query request may further carry an ID of the service entity 12 (usually a website for sharing videos), where the ID is utilized by the CIM entity 11 to search for copyright management information corresponding to the service entity 12.

When the type of query request is Download copyright validate, the query request may further carry an ID of the user who downloads the content, where the ID is utilized by the CIM entity 11 to search for security management rules corresponding to the user.

When the type of query request is Software verification, the query request may further carry information such as software name and version number.

Step S604: The CIM entity 11 searches for corresponding registered content information stored in the database.

The CIM entity 11 may search for the corresponding registered content information stored in the database according to the fingerprint, or according to the content ID and/or content name. This is largely due to different application purposes, and practical problems thereof.

When the content needs to be protected and filtered, a content is regarded as infringing the copyright or belonging to the information to be filtered if its key fingerprint in a visual perceivable part is inconsistent with the protected content. The contents may usually have their names and IDs modified in order to elude the management. In terms of such type of contents, the CIM entity 11 shall search for the content fingerprint database according to the fingerprint.

In terms of software verification and some other applications, e.g., advertisement triggering, in their application scenarios the content name may generally not be maliciously modified or may be detected by the service entity 11. For example, when the user downloads software, a software verification process is automatically triggered, because the user may usually download the software when the software name and version he or she sees indicates that it is his or her desired software. Usually, the software download website may not modify the software name to deceive the user. Therefore, the main issue to be addressed by software verification is the protection of software from embedded with virus or malicious plug-in. With respect to such type of contents, the CIM entity 11 may search in the content fingerprint database according to the content name and/or the content ID.

According to the embodiment of the present invention, when the search is according to the content ID, the content ID may be content name or auxiliary information, e.g., version number, ID assigned by the CIM entity 11 for the content, or, the combination of content name, auxiliary information and ID.

When the search in the content fingerprint database is according to the fingerprint, and if the algorithm for generating fingerprint in the query request is the traditional Hash algorithm, e.g., MD5, the content fingerprint to be verified shall be exactly identical with the stored fingerprint. If the algorithm for generating fingerprint is a Hash algorithm based on content, the content fingerprint to be verified and the stored fingerprint is regarded as the fingerprint of the same content if the difference between them is less than a threshold. The value of the threshold is determined by the specific algorithm.

When the search in the content fingerprint database is based on the content ID, and if the search fails, the CIM entity 11 may search again according to the fingerprint. However, the probability of success, the consumption and the balance shall be considered for whether the search is to be performed again. With respect to software verification, the general scenario is that the software verification is automatically triggered after the user has downloaded the software, or, the software verification is triggered by a service gateway when the software passes the service gateway. Therefore, indications such as "this is the desired software" may be provided at this point, which means there is nothing wrong with the software name or version number. Thus, if no corresponding stored content is found after the search based on ID or name, it is likely that the software has not been registered with the CIM entity. If the software ID or name has been modified, the corresponding stored content will no be found according to ID. In this case, if the search is performed again according to FP and corresponding stored content is found, the CIM entity 11 may draw a conclusion that there is nothing wrong with the content itself but its name or ID is modified. It is meaningful to inform the user of the conclusion. If corresponding stored content is still not found, it indicates that other information is inserted into the content and the content name is modified, or the content is not registered so that the CIM entity fails to determine what exactly the content is. The CIM entity 11 may decide whether to inform the user of the two results aforementioned according to the internal policy of the CIM entity 11.

Step S605: The CIM entity 11 acquires a corresponding attribute of the content according to the query type.

When the query type is Upload copyright validate, the CIM entity 11 queries the copyright statement and the copyright management rules of the content, and checks whether the copyright management rules include a specified management rule of the service entity 12 that corresponds to the service entity ID carried in the query request.

When the query type is Download copyright validate, the CIM entity 11 queries the copyright statement and the copyright management rules of the content, and checks whether the copyright management rules include a specified management rule of the service entity 12 that corresponds to the user ID carried in the query request.

When the query type is anti-spam filtering, a content type and a filtering requirement are queried.

When the query type is software verification, in step S604, the CIM entity 11 does not search for the content according to the fingerprint in the query request. Instead, the CIM entity 11 searches for a corresponding fingerprint according to the software name and the software version number, then compares the two fingerprints, and puts the compare result into a response message.

Step S606: The CIM entity 11 returns the response message to the service entity 12.

The response message includes a processing result code and a corresponding content attribute. The service entity 12 may perform corresponding management operation on the content of the service entity 12 according to the returned content attribute.

In addition, the CIM entity 11 may carry the content certificate of the content in the response message and send the response message to the service entity 12, so that for the management of the same content, the service entity 12 may no longer send a query to the CIM entity 11.

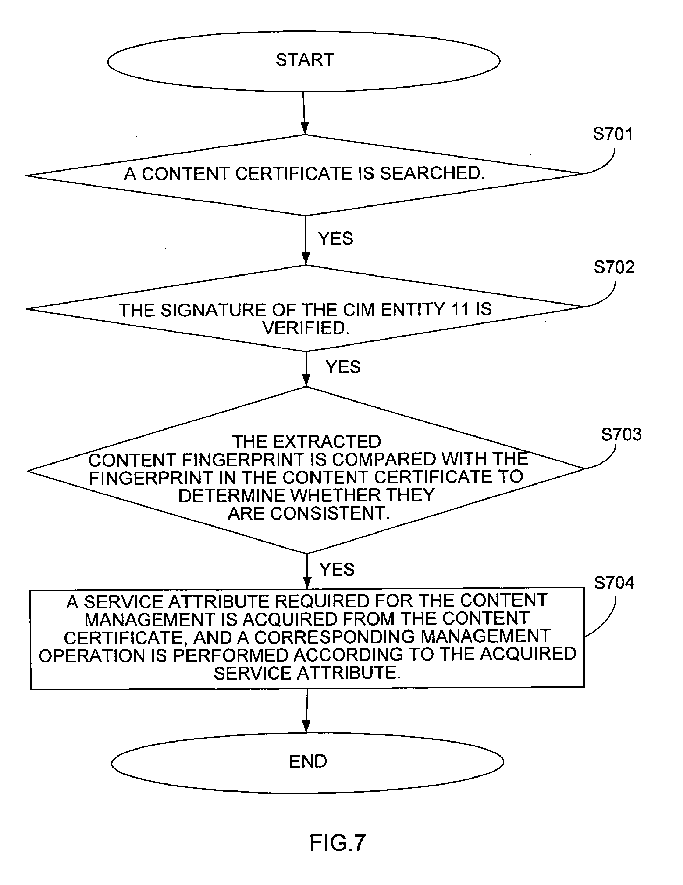

According to another implementation of the present invention, after step S602, the service entity 12 may perform the process illustrated in Figure 7 to acquire the content attribute. Specifically, the process includes the following steps:
Step S701: A content certificate is searched. If the content received by the service entity 12 carries the content certificate, or, the service entity 12 finds out the corresponding content certificate at local according to content ID, name or fingerprint, then the service entity 12 may acquire the content attribute according to the content certificate. If the content certification is not found, step S603 is performed directly. If the content certification is found, step S702 is performed.
Step S702: The signature of the CIM entity 11 is verified. If the signature is signed by the CIM entity 11 in the domain to which the service entity 12 belongs, or, if the service entity 12 is able to acquire the certificate of the CIM entity 11 that signs the content certificate, the CIM certificate may be used for verifying the signature of the CIM entity 11. If the signature verification is successful, step S703 is performed. If the signature verification fails, step S603 is performed directly.
Step S703: The extracted content fingerprint is compared with the fingerprint in the content certificate to determine whether they are consistent.

The two fingerprints being identical, or the difference between the two fingerprints being less than a threshold may come up to the standard for determining that the two fingerprints are consistent. If the two fingerprints are not consistent, indicating that the content certificate carried in the content is not the content certificate of the content, the service entity 12 may connect to the CIM entity 11 for a query and step S603 is performed. If the two fingerprints are consistent, step S704 is performed.

Step S704: A service attribute required for the content management is acquired from the content certificate, and a corresponding management operation is performed according to the acquired service attribute.

If the aforementioned operation is successful, where the content attribute is acquired according to the content certificate, the service entity 12 may not need to connect to the CIM entity 11, thereby reducing the burden of the CIM entity 11, and improving the efficiency for acquiring the content attribute and performing the content management operation by the service entity 12.

According to the aforementioned method for content identification, the CIM entity 11 provides basic services via centralized CIM entity 11 as well as the synchronization among CIM entities 11 in different domains, so that the CIM entity 11 may provide universal functions for copyright management, filtering, software verification, advertisement triggering, etc., and therefore the burden and cost of the service entity 12 may be reduced. With the mechanism of content certificate, the service entity 12 does not need to connect to the CIM entity 12 every time for the content verification, thereby reducing the burden of the CIM entity 11.

Moreover, according to the embodiment of the present invention, the CIM entity 11 selects a most appropriate identification method for accurately identifying a content with respect to the characteristics of different types of contents, and the service entity 12 manages the content of the service entity 12 according to the content attribute of different contents. Thus, the robustness is improved and the error rate is reduced.

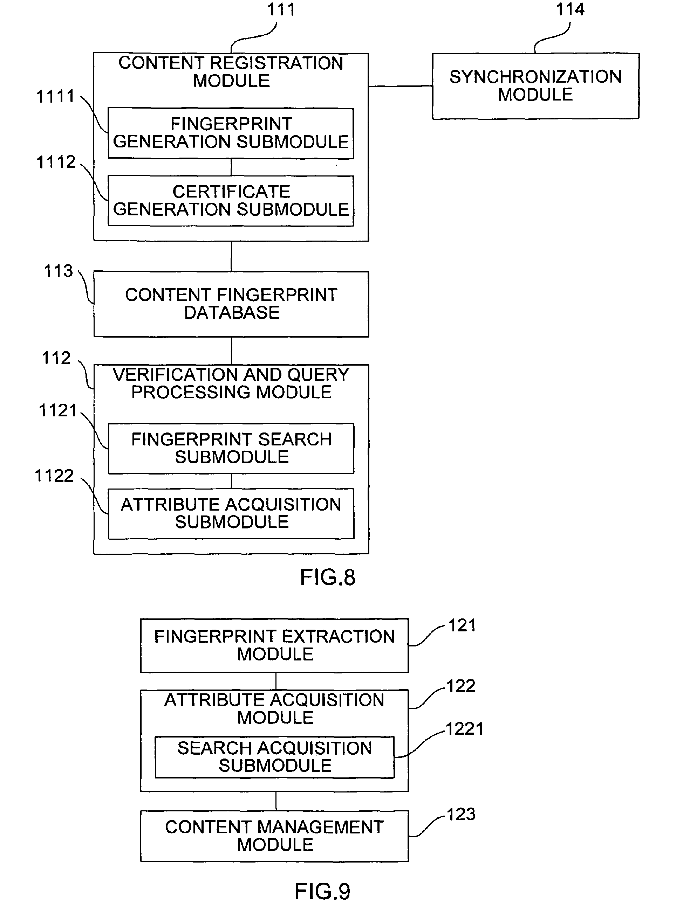

Figure 8 illustrates a block diagram of a Content Identification Manager (CIM) entity 11 according to one embodiment of the present invention. The CIM entity 11 includes:
a content registration module 111, configured to receive a request for registering content sent from a registration entity 13, and register a content submitted by the registration entity 13; where the registration of the content submitted by the registration entity 13 includes fingerprint extraction, attribute authenticity verification, and content certificate generation;
a verification and query processing module 112, configured to receive a request for querying a content attribute sent by a service entity 12, where the request for querying the content attribute includes a content fingerprint and a type of query request; search for a stored content fingerprint closest to the content fingerprint in a content fingerprint database of the CIM entity 11 according to the content fingerprint carried in the request for querying the content attribute; acquire a content attribute of the registered content according to the type of query request carried in the request for querying the content attribute, after the stored content fingerprint closest to the content fingerprint is found; and return the acquired content attribute to the service entity 12, so that the service entity 12 manages the content of the service entity 12; and
a content fingerprint database 113, content fingerprint database, configured to store a content fingerprint and a content attribute of the registered content, where the content fingerprint database 113 is responsible for storing content fingerprint, attribute, and certificate, which may be stored in the form database, or stored in a file system, e.g., stored as a file in the form of Extensible Markup Language (XML).

The content registration module 111 includes a fingerprint generation submodule 1111, configured to select an algorithm for generating fingerprint according to parameters of a content type and a registration purpose, generate the content fingerprint, and store the generated content fingerprint and the content attribute of the content into the content fingerprint database 113.

The content registration module 111 further includes a certificate generation submodule 1112, configured to generate a content certificate for the registered content, where the content certificate includes fingerprint of a registered content, a content attribute, the registration entity, and a method for verifying an authenticity of the content attribute.

The verification and query processing module 112 includes:
a fingerprint search submodule 1121, configured to search for a stored content fingerprint closest to the content fingerprint in the content fingerprint database 113 according to the content fingerprint carried in the request for querying the content attribute;
   an attribute acquisition submodule 1122, configured to acquire the content attribute according to the type of query request carried in the request for querying the content attribute, after the stored content fingerprint closest to the content fingerprint is found by the fingerprint search submodule 1121; and return the acquired content attribute to the service entity 12.

The CIM entity 11 further includes a synchronization module 114, configured to synchronize registration information of the content with CIM entities other than the CIM entity 11.

Figure 9 illustrates a block diagram of a service entity 12 according to one embodiment of the present invention. The service entity 12 includes:
a fingerprint extraction module 121, configured to select an algorithm for extracting fingerprint according to the content type and the purpose of managing the content by the service entity 12, and extract the content fingerprint;
an attribute acquisition module 122, configured to acquire the content attribute of the content registered with the CIM entity 11 according to the content fingerprint extracted by the fingerprint extraction module 121; and
a content management module 123, configured to manage the content of the service entity 12 according to the content attribute acquired by the attribute acquisition module 122.

The attribute acquisition module 122 may include a search acquisition submodule 1221, configured to search for the content certificate and acquire the content attribute according to the found content certificate.

According to another embodiment of the present invention, the attribute acquisition module 122 may include a query acquisition submodule, configured to send the CIM entity 11 a request for querying the content attribute, and receive the content attribute retuned by the CIM entity 11, where the request for querying the content attribute includes a content fingerprint, an algorithm for generating fingerprint, and a type of query request.

With the description of the foregoing embodiments, it is readily appreciated by those skilled in the art that the present invention may be implemented with hardware, and may also be implemented with software on a necessary hardware platform. Based on this understanding, solutions provided by the present invention may be embodied in a software product. The software product may be stored in a nonvolatile storage media (may be a CD-ROM, a USB flash disc, a mobile hard disc, etc.) The software product may include a set of instructions enabling a computer device (may be a personal computer, a server, or a network device, etc.) to perform methods according to various embodiments of the present invention.

In summary, the foregoing is merely preferred embodiments of the present invention and is not intended to be limiting to the scope of the present invention. Any modifications, equivalents, improvements made within the spirit and principle of the present invention shall be construed as fall within the scope of the present invention.

## Claims

1. A method for content identification, **characterized by** comprising:
selecting a algorithm for extracting fingerprint according to a content type and a purpose of managing the content by a service entity, and extracting a content fingerprint; and
acquiring a content attribute of a registered content according to the content fingerprint.

2. The method of claim 1, **characterized in that**, after the process of acquiring a content attribute of a registered content according to the content fingerprint, the method further comprises:
managing the content of the service entity according to the acquired content attribute.

3. The method of claim 1, **characterized in that**, the process of selecting a algorithm for extracting fingerprint according to a content type and a purpose of managing the content by a service entity, and extracting a content fingerprint comprises:
if the content type is text and the purpose of managing the content by the service entity is to filter the content, calculating a Hash value of the content using a traditional Hash algorithm, or, first extracting a keyword of text content, then calculating a Hash value of the keyword, and regarding the calculated Hash value as the content fingerprint; or,
if the content type is text and the purpose of managing the content by the service entity is to protect the copyright of the content, calculating a Hash value of the content using a traditional Hash algorithm, and regarding the calculated Hash value as the content fingerprint; or,
if the content type is picture, audio, or video, extracting the content fingerprint using a content based Hash algorithm, wherein the content based Hash algorithm comprises an algorithm for extracting the content fingerprint and a robustness Hash algorithm.

4. The method of claim 1, **characterized in that**, the process of acquiring a content attribute of a registered content according to the content fingerprint comprises:
searching for a content certificate, and acquiring the content attribute according to the content certificate; or,
sending a Content Identification Manager (CIM) entity a request for querying the content attribute, and receiving the content attribute retuned by the CIM entity, wherein the request for querying the content attribute comprises the content fingerprint, and a type of query request.

5. The method of claim 4, **characterized in that**, the process of searching for a content certificate and acquiring the content attribute according to the content certificate comprises:
verifying a signature of a content certificate after the content certificate is found, and acquiring the content attribute from the content certificate after the signature is successfully verified.

6. The method of claim 4, **characterized in that**, the type of query request comprises Upload copyright validate, Download copyright validate, Anti-spam filtering, and software verification.

7. The method of claim 6, **characterized in that**, when the type of query request is the Upload copyright validate, the request for querying the content attribute further comprises a service entity identifier; or
when the type of query request is the software verification, the request for querying the content attribute further comprises a software name and version information; or,
when the type of query request is the Download copyright validate, the request for querying the content attribute further comprises a user identifier.

8. The method of claim 1, **characterized in that**, the registered content is registered with the CIM entity.

9. A method for content identification, **characterized by** comprising:
receiving a request for querying a content attribute sent by a service entity, wherein the request for querying the content attribute comprises a content fingerprint and a type of query request;
searching for a stored content fingerprint closest to the content fingerprint in a content fingerprint database of a Content Identification Manager (CIM) entity according to the content fingerprint carried in the request for querying the content attribute; and
acquiring the content attribute of the registered content according to the type of query request carried in the request for querying the content attribute, after the stored content fingerprint closest to the content fingerprint is found, and returning the acquired content attribute to the service entity.

10. The method of claim 9, **characterized in that**, the type of query request comprises Upload copyright validate, Download copyright validate, Anti-spam filtering, and software verification.

11. The method of claim 10, **characterized in that**, when the type of query request is the Upload copyright validate, the request for querying the content attribute further comprises a service entity identifier, and the acquired content attribute further comprises a copyright statement and copyright management rules of the service entity that correspond to the service entity identifier.

12. The method of claim 10, **characterized in that**, when the type of query request is the software verification, the request for querying the content attribute further comprises a software name and version information; and
the process of searching for a stored content fingerprint closest to the content fingerprint in a content fingerprint database of a CIM entity according to the content fingerprint carried in the request for querying the content attribute comprises:
searching for the stored content fingerprint closest to the content fingerprint in the content fingerprint database of the CIM entity according to the software name and the software version information carried in the request for querying the content attribute.

13. The method of claim 10, **characterized in that**, when the type of query request is the Download copyright validate, the request for querying the content attribute further comprises a user identifier.

14. A content registration method for content identification, **characterized by** comprising:
receiving a request for registering content sent by a registration entity;
selecting an algorithm for generating fingerprint according to parameters of a content type and a registration purpose carried in the request for registering content, and generating a content fingerprint; and
storing the generated content fingerprint and the content attribute of the content to accomplish the registration of the content submitted by the registration entity.

15. The method of claim 14, **characterized in that**, the registration of the content submitted by the registration entity further comprises:
generating a content certificate for the registered content, wherein the content certificate comprises fingerprint of a registered content , a content attribute, a registration entity, and a method for verifying an authenticity of the content attribute.

16. The method of claim 15, **characterized in that**, the method for verifying the authenticity of the content attribute comprises: an identifier of a Content Identification Manager (CIM) entity, a method adopted by the CIM entity for authenticating the registration entity, and the method adopted by the CIM entity for verifying the authenticity of the content attribute.

17. The method of claim 14, **characterized in** further comprising: synchronizing registration information of the content with other CIM entities other than the CIM entity; generating, by the other CIM entities, a content certificate for the content according to registration information of the content, wherein the content certificate generated by the other CIM entities comprises an identifier of the original CIM entity, and a method for verifying an authenticity of the content attribute adopted by the original CIM entity.

18. A system for content identification, **characterized by** comprising:
a service entity, configured to select an algorithm for extracting fingerprint according to a content type and a purpose of managing the content by the service entity, extract the content fingerprint, and acquire a content attribute of the content registered with the CIM entity according to the content fingerprint;
a Content Identification Manager (CIM) entity, configured to receive a request for querying a content attribute sent by the service entity, wherein the request for querying the content attribute comprises the content fingerprint and a type of query request; search for a stored content fingerprint closest to the content fingerprint in a content fingerprint database of the CIM entity according to the content fingerprint carried in the request for querying the content attribute; acquire the content attribute of the registered content according to the type of query request carried in the request for querying the content attribute, after the stored content fingerprint closest to the content fingerprint is found; and return the acquired content attribute to the service entity.

19. The system of claim 18, **characterized by** further comprising:
a registration entity, configured to send a request for registering content to the CIM entity, requesting the CIM entity to register the content submitted by the registration entity.

20. A service entity, **characterized by** comprising:
a fingerprint extraction module, configured to select a algorithm for extracting fingerprint according to a content type and a purpose of managing the content by the service entity, and extract a content fingerprint; and
an attribute acquisition module, configured to acquire the content attribute of the content registered with a Content Identification Manager (CIM) entity according to the content fingerprint extracted by the fingerprint extraction module.

21. The service entity of claim 20, **characterized by** further comprising:
a content management module, configured to manage the content of the service entity according to the content attribute acquired by the attribute acquisition module.

22. The service entity of claim 20, **characterized in that**, the attribute acquisition module comprises:
a search acquisition submodule, configured to search for a content certificate and acquire the content attribute according to the found content certificate; or
a query acquisition submodule, configured to send the CIM entity a request for querying the content attribute, and receive the content attribute retuned by the CIM entity, wherein the request for querying the content attribute comprises a content fingerprint, an algorithm for generating fingerprint, and a type of query request.

23. A Content Identification Manager (CIM) entity, **characterized in** comprising:
a content registration module, configured to receive a request for registering content sent from a registration entity, and register a content submitted by the registration entity;
a content fingerprint database, configured to store a content fingerprint and a content attribute of the registered content; and
a verification and query processing module, configured to receive a request for querying a content attribute sent by a service entity, wherein the request for querying the content attribute comprises a content fingerprint and a type of query request; search for a stored content fingerprint closest to the content fingerprint in a content fingerprint database of the CIM entity according to the content fingerprint carried in the request for querying the content attribute; acquire a content attribute of the registered content according to the type of query request carried in the request for querying the content attribute, after the stored content fingerprint closest to the content fingerprint is found; and return the acquired content attribute to the service entity.

24. The CIM entity of claim 23, **characterized in that**, the content registration module comprises:
a fingerprint generation submodule, configured to select an algorithm for generating fingerprint according to parameters of a content type and a registration purpose, generate the content fingerprint, and store the generated content fingerprint and the content attribute of the content into the content fingerprint database.

25. The CIM entity of claim 24, **characterized in that**, the content registration module further comprises:
a certificate generation submodule, configured to generate a content certificate for the registered content, wherein the content certificate comprises fingerprint of a registered content fingerprint, a content attribute, the registered service entity, and a method for verifying an authenticity of the content attribute.

26. The CIM entity of claim 23, **characterized in that**, the verification and query processing module comprises:
a fingerprint search submodule, configured to search for a stored content fingerprint closest to the content fingerprint in the content fingerprint database according to the content fingerprint carried in the request for querying the content attribute; and
an attribute acquisition submodule, configured to acquire the content attribute according to the type of query request carried in the request for querying the content attribute, after the stored content fingerprint closest to the content fingerprint is found by the fingerprint search submodule; and return the acquired content attribute to the service entity.

27. The CIM entity of claim 23, **characterized by** further comprising:
a synchronization module, configured to synchronize registration information of the content with CIM entities other than the CIM entity.
